# EUROPÄISCHE PATENTSCHRIFT

(11) **EP 1 286 097 B1**
(45) Veröffentlichungstag und Bekanntmachung des Hinweises auf die Patenterteilung: **14.09.2005**
(21) Anmeldenummer: 02016463.8
(22) Anmeldetag: 23.07.2002
(51) Int. Cl.: F16L 25/00

(54) **Verbindung zwischen dem Ende eines schraubenlinienförmig gewellten Metallrohres mit einem Anschlussstück**
Connection between the end of a helically corrugated metal pipe and a fitting
Connexion entre l'extrémité d'un tuyau métallique ondulé en hélice et un raccord

(30) Priorität: 22.08.2001 DE 20113861 U
(43) Veröffentlichungstag der Anmeldung: 26.02.2003
(73) Patentinhaber: BRUGG Rohr AG, Holding, 5200 Brugg (CH)
(72) Erfinder: Homann, Jörn, Dipl.-Ing., 30655 Hannover (DE)

(56) Entgegenhaltungen:
- EP-A- 0 474 114
- DE-A- 19 943 473
- DE-C- 858 620
- US-A- 2 848 254
- US-A- 5 799 989
- US-B1- 6 237 969

## Beschreibung

Die Erfindung betrifft eine Verbindung zwischen dem Ende eines schraubenlinienförmig gewellten Metallrohres und einem Anschlußstück nach dem Oberbegriff des Anspruchs 1.

Zur Herstellung einer Verbindung von Metallrohren miteinander bzw. einer Verbindung zwischen einem Metallrohr und einem Anschlußstück gibt es mannigfaltige Lösungen. So ist es üblich, die genannten Bauteile miteinander zu verlöten oder zu verschweißen bzw. zu verschrauben.

Problematisch ist die Herstellung einer Verbindung von dünnwandigen Metallrohren miteinander bzw. mit einem Flansch, da ein Verschrauben oder Verschweißen wegen der geringen Wanddicke nur schwer durchführbar ist, und ein Verlöten nur bei wenigen Metallen sinnvoll ist.

Noch komplizierter gestaltet sich der Anschluß eines schraubenlinienförmig gewellten dünnwandigen Metallrohres an einen Flansch.

Aus der CH-PS 589 249 ist es bekannt, das Ende eines gewellten Metallrohres gegen die Innenfläche eines Flansches zu walzen, wobei die Wellung eingeebnet wird. Durch den beim Walzen anstehenden hohen Anpreßdruck entsteht zwischen dem ehemals gewellten Metallrohr und dem Metallflansch eine dichte Preßverbindung. Diese Art der Verbindung erfordert einen hohen apparativen Aufwand an der Montagestelle und setzt dickwandige Formteile voraus.

Eine andere Verbindungsart für gewellte Metallrohre ist in der DE-PS 33 02 450 beschrieben. Auf das Ende eines gewellten Rohres wird eine Stützbuchse geschraubt, und ein Rohrstutzen in das Ende des gewellten Rohres geschraubt. Die Abdichtung ergibt sich dadurch, daß die lichte Weite der Stützbuchse zum Ende hin zunimmt und/oder der Außendurchmesser des Rohrstutzens zum Ende hin abnimmt. Beim Einschrauben des Rohrstutzens in das durch ein Formwerkzeug der Innenkontur der Außenbuchse angepaßte Wellrohrende wird das Wellrohr zwischen dem Rohrstutzen und der Stützbuchse abgedichtet.

Aus der DE-OS 40 27 818 ist eine Anschlußarmatur für schraubenlinienförmig gewellte Metallrohre bekannt, die eine auf das Wellrohrende aufgeschraubte Außenbuchse mit einem das Wellrohrende überragenden Glattrohransatz aufweist. Der Glattrohransatz besitzt ein Innengewinde, in welches ein Anschlußrohrstück eingeschraubt wird. Das Anschlußrohrstück dringt mit einem abgestuften Ende in das Wellrohr ein. Beim Einschrauben des Anschlußrohrstücks wird die Wellung des Wellrohres am Ende gestaucht. Die Abdichtung erfolgt durch eine in die letzten Wellengänge eingelegte Dichtungsschnur aus Graphit, die beim Stauchen der Wellung verformt und gegen die Innenwandung der Außenbuchse und das in das Wellrohrende eingedrungene abgestufte Ende des Rohrstutzens gepreßt wird.

Aus der DE-A-3 341 297 ist eine Dichtpackung zum Abdichten von Wellrohren bekannt, die aus zwei auf dem Wellrohr angeordneten gegeneinander bewegbaren und ineinander fassenden Buchsen besteht, zwischen welchen ein das Wellrohr umfassender Ringraum zur Aufnahme einer Dichtmasse gebildet wird. Es ist eine sich von innen an den Dichtbereich anlegende Wellrohrhülse vorgesehen. Als Dichtmasse wird Graphit vorgeschlagen.

Aus der US-A-2 848 254 ist eine Verbindung zwischen dem Ende eines schraubenlinienförmig gewellten Metallrohres mit einem Anschlußstück bekannt, wobei auf das Ende des gewellten Metallrohres ein Druckring mit einem der schraubenlinienförmigen Wellung angepaßten Gewinde aufgeschraubt ist, der Druckring einen hülsenförmigen Ansatz aufweist, der einen größeren Innendurchmesser als das Gewinde besitzt und ein Innengewinde aufweist und das Anschlußstück mit einem an seiner äußeren Oberfläche befindlichen Außengewinde in das Innengewinde des hülsenförmigen Ansatzes eingeschraubt ist und einen in das Ende des gewellten Metallrohres hineinragenden hohlzylindrischen Ansatz aufweist, dessen Außendurchmesser gleich oder geringfügig kleiner als der Innendurchmesser des gewellten Metallrohres ist. Zwischen dem Druckring, dem hülsenförmigen Ansatz, einer Stirnfläche des Anschlußstücks und dem Ende des gewellten Metallrohres ist ein Hohlraum befindlich, in welchem ein Dichtungsring angeordnet ist. Beim Einschrauben des Anschlußstücks in den Druckring wird der Hohlraum verkleinert und der Dichtring dabei komprimiert. Als Material für den Dichtring wird ein elastisch verformbares Material wie z. B. Gummi vorgeschlagen.

Der vorliegenden Erfindung liegt die Aufgabe zugrunde, eine Verbindung für schraubenlinienförmig gewellte Metallrohre mit einem Anschlußteil bereitzustellen, die aus einfachen Bauteilen besteht, ohne Spezialwerkzeuge montierbar ist und eine verbesserte Abdichtung aufweist.

Insbesondere soll auf den Einsatz von Schweiß- oder Lötwerkzeugen verzichtet werden.

Diese Aufgabe wird durch die im Kennzeichen des Anspruchs 1 erfaßten Merkmale gelöst.

Der wesentliche Vorteil der Erfindung ist darin zu sehen, daß sich die Dichtung im Kraftnebenschluß befindet und somit Kräfte und Biegemomente über die Anschlußteile abgeleitet werden. Dies führt zu einer dauerhaften Abdichtung auch bei kräftigen Temperaturschwankungen.

Ein besonderer Vorteil besteht noch darin, daß die erfindungsgemäße Verbindung für ein aus zwei Wellrohren bestehendes Leitungsrohr besonders geeignet ist. Ein solches Leitungsrohr weist zwischen den Wellrohren eine Wärmedämmschicht aus aufgeschäumtem Kunststoff auf und findet bevorzugt Anwendung als Fernwärmeleitungsrohr.

Weitere vorteilhafte Ausgestaltungen der Erfindung sind in den Unteransprüchen erfaßt.

Die Figuren 1 bis 3 zeigen den Ablauf zur Herstellung der erfindungsgemäßen Verbindung.

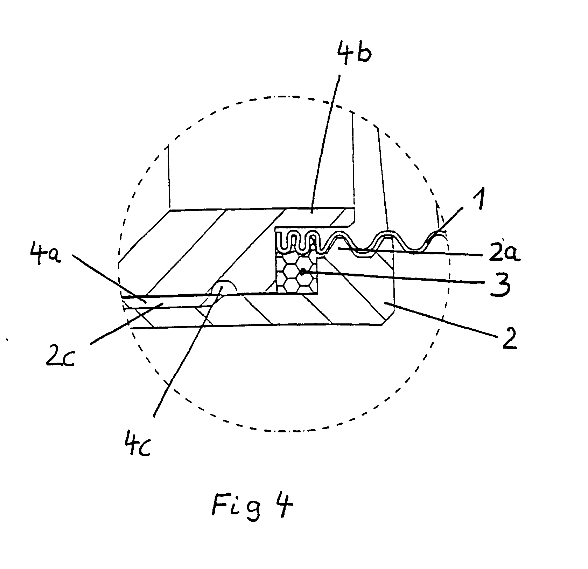

In Figur 4 ist ein vergrößerter Ausschnitt der fertiggestellten Verbindung im Abdichtungsbereich dargestellt.

Auf das Ende eines schraubenlinienfömig gewellten Metallrohres 1 wird ein Druckring 2 mittels eines der schraubenlinienförmigen Wellung angepaßten Grobgewindes 2a aufgeschraubt. Der Druckring 2 weist einen hülsenförmigen Ansatz 2b auf, der einen größeren Innendurchmesser aufweist als das Metallrohr 1. An seiner inneren Oberfläche ist ein Innengewinde 2c vorgesehen. Der Druckring 2 ist soweit auf das Ende des Metallrohres 1 aufgeschraubt, daß der hülsenförmige Ansatz 2b das Ende des Metallrohres 1 überragt.

In den zwischen dem Metallrohr 1 und dem Ansatz 2b gebildeten Ringspalt wird ein Dichtring 3 eingeschoben, dessen längsaxiale Ausdehnung so bemessen ist, daß sein eines Ende mit dem Ende des Metallrohres 1 abschließt. Sein entgegengesetztes Ende stützt sich an der inneren Flanke des Druckringes 2 ab. Durch Vor- bzw. Rückschrauben des Druckringes 2 wird sichergestellt, daß der Dichtring 3 mit dem Ende des Wellrohres 1 abschließt. Der Dichtring 3 ist vorteilhafterweise aus Graphit mit einer Ausgangsdichte von 1.0 bis 1,5 g/cm³ hergestellt.

Das Anschlußstück 4 besitzt an seiner äußeren Oberfläche ein Außengewinde 4a, dessen Steigung der Steigung des Innengewindes 2c des Ansatzes 2 entspricht. An seinem dem Ende des Metallrohres 1 zugekehrten Ende weist das Anschlußstück 4 einen hohlzylindrischen Ansatz 4b auf, dessen Außendurchmesser annähernd gleich dem Innendurchmesser des Metallrohres 1 ist.

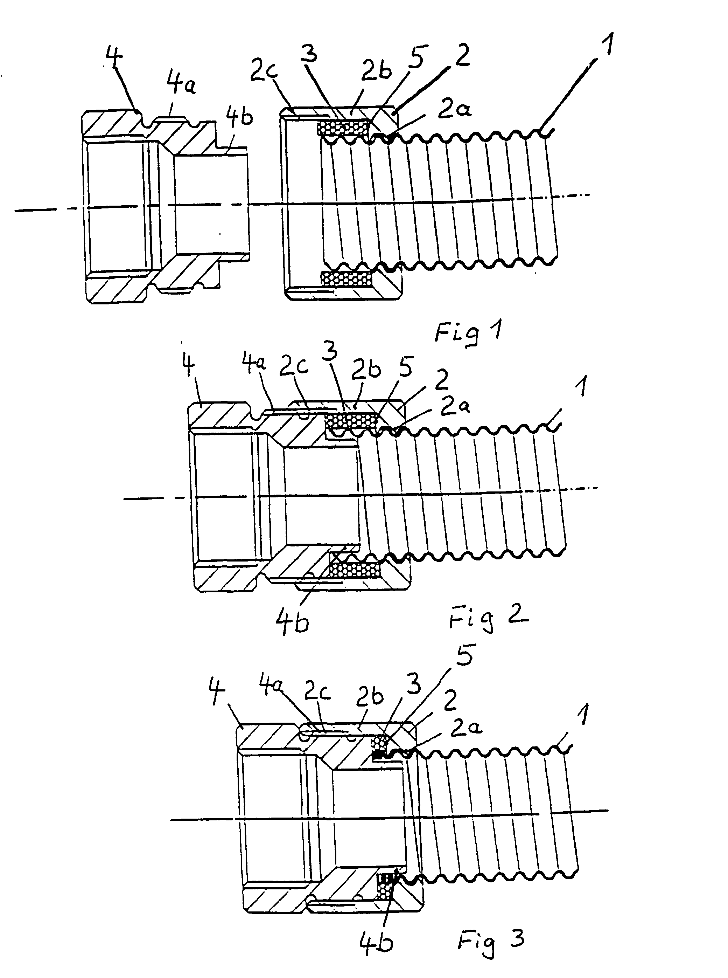

Wie in Figur 2 dargestellt wird das Anschlußstück 4 mit dem Druckring 2 mit Hilfe der Gewinde 2c und 4 verschraubt. Dabei dringt der Ansatz 4b in das Ende des Metallrohres 1 ein. Auf diese Weise entsteht eine den Dichtring 3 aufnehmende Kammer 5, die durch das Ende des Metallrohres 1, der inneren Stirnfläche des Druckrings 2, den Ansatz 2b sowie die zwischen dem Ansatz 4b und dem Gewinde 4a vertikal zur Längsachse des Metallrohres 1 verlaufende Stirnfläche des Anschlußstücks 4 begrenzt ist.

Durch weiteres Einschrauben des Anschlußstücks 4 in den Ansatz 2b wird das Volumen der Kammer 5 allmählich verringert und der Dichtring 3 verformt und komprimiert. Für diesen Kompressionsvorgang ist es wichtig, daß das Verbindungsgewinde (Innengewinde 2c und Außengewinde 4a) gegensinnig zur Steigung der Wellung des Metallrohres verläuft. Dadurch wird verhindert, daß sich beim Verschrauben der Druckring 2 auf dem gewellten Metallrohr 1 verdreht.

Beim Verschrauben des Anschlußstücks 4 mit dem Druckring 2 wird nicht nur der Dichtring 3 komprimiert, sondern es werden auch die zwischen dem Grobgewinde 2a und dem Ende des Metallrohres 1 befindlichen Wellengänge gestaucht. Es wirken also nicht nur längsaxiale Kräfte sondern auch radiale Kräfte auf den Dichtring 3 ein. Die notwendige Flächenpressung wird über einen Gesamtverformungsweg von 50 - 70 % der Ausgangslänge erzeugt.

In der äußeren Oberfläche des Anschlußstücks 4 ist zwischen dem Gewinde 4a und der dem Wellrohrende zugekehrten Stirnfläche des Anschlußstücks 4 eine sogenannte Räumnut 4c vorgesehen. Diese Räumnut 4c nimmt den aus dem Verbindungsgewinde (2c und 4a) ausgeschälten Graphit auf und verhindert somit, daß das Verbindungsgewinde (2c und 4a) blockiert.

Der hohlzylindrische Ansatz 4b stützt die verformten Wellengänge des Metallrohres 1 ab.

## Patentansprüche

1. Verbindung zwischen dem Ende eines schraubenlinienförmig gewellten Metallrohres (1) und einem Anschlußstück (4), bei dem
a) auf das Ende des schraubenlinienförmig gewellten Metallrohres (1) ein Druckring (2) mit einem der schraubenlinienförmigen Wellung angepaßten Gewinde (2a) aufgeschraubt ist,
b) der Druckring (2) einen hülsenförmigen Ansatz (2b) aufweist, der einen größeren Innendurchmesser als das Gewindes (2a) besitzt,
c) der hülsenförmige Ansatz (2b) des Druckringes (2) ein Innengewinde (2c) aufweist,
d) das Anschlußstück (4) mit einem an seiner äußeren Oberfläche befindlichen Außengewinde (4a) in das Innengewinde (2c) des hülsenförmigen Ansatzes (2b) eingeschraubt ist,
e) das Anschlußstück (4) einen in das Ende des schraubenlinienförmig gewellten Metallrohres (1) hineinragenden hohlzylindrischen Ansatz (4b) aufweist, dessen Außendurchmesser gleich oder geringfügig kleiner ist als der Innendurchmesser des schraubenlinienförmig gewellten Metallrohres (1),
f) zwischen dem Druckring (2), dem hülsenförmigen Ansatz (2b), einer Stirnfläche des Anschlußstücks (4) und dem Ende des schraubenlinienförmigen gewellten Metallrohres (1) ein Hohlraum (5) befindlich ist, in welchem ein Dichtungsring (3) angeordnet ist
**dadurch gekennzeichnet,**
**daß** der Dichtring (3) aus Graphit besteht, der Dichtring durch das Einschrauben des Anschlußstücks (4) und der **dadurch** entstehenden Verkleinerung des Hohlraums (5) komprimiert ist und den verkleinerten Hohlraum vollständig ausfüllt und daß das Ende des schraubenlinienförmig gewellten Metallrohres (1) gestaucht ist.

2. Verbindung nach Anspruch 1, **dadurch gekennzeichnet, daß** der Dichtring (3) aus Graphit mit einer Ausgangsrohdichte von 1,0 bis 1,5 g/cm³ besteht.

3. Verbindung nach einem der Ansprüche 1 bis 2, **dadurch gekennzeichnet, daß** der Dichtring (3) mit dem Ende des schraubenlinienförmig gewellten Metallrohres (1) abschließt.

4. Verbindung nach einem der Ansprüche 1 bis 3, **dadurch gekennzeichnet, daß** das Anschlußstück (4) an seiner äußeren Oberfläche zwischen seinem dem Ende des schraubenlinienförmig gewellten Metallrohres (1) zugekehrte Ende und seinem Außengewinde (4a) eine umlaufende Nut (4c) aufweist.

5. Verbindung nach einem der Ansprüche 1 bis 4, **dadurch gekennzeichnet, daß** die Steigung des Innengewindes (2c) des hülsenförmigen Ansatzes (2b) und des Außengewindes (4a) des Anschlußstücks (4) gegensinnig gegenüber der schraubenlinienförmigen Wellung des Metallrohres (1) gegensinnig verläuft.

6. Verbindung nach einem der Ansprüche 1 bis 5, **dadurch gekennzeichnet, daß** der Hohlraum auf weniger als 30 % gegenüber dem Beginn des Aufschraubens verkleinert ist.

## Claims

1. Connection between the end of a helically-corrugated metal pipe (1) and a connector (4) whereby:
a) a pressure ring (2) with a helically adapted thread (2a) is screwed on to the end of the helically-corrugated metal pipe (1),
b) the pressure ring (2) has a sleeve-shaped extension (2b) possessing a larger inner diameter than the thread (2a),
c) the sleeve-shaped projection (2b) of the pressure ring (2) has an inner thread (2c),
d) the connector (4) with an outer thread (4a) on its outer surface is screwed into the inner thread (2c) of the sleeve-shaped extension (2b),
e) the connector (4) has a hollow cylindrical extension (4b) extending into the end of the helically-corrugated metal pipe (1) whose outer diameter is the same or slightly less than the inner diameter of the helically-corrugated pipe (1),
f) there is a cavity (5) between the pressure ring (2), the sleeve-shaped extension (2b), a face of the connector (4), and the end of the helically-corrugated metal pipe (1), in which a sealing ring is located (3), **characterized in that** the sealing ring (3) consists of graphite, the sealing ring is compressed by screwing in the connector (4) and the arising reduction of the cavity (5) completely fills the reduced cavity, and the end of helically-corrugated metal pipe (1) is compressed.

2. Connection according to claim 1, **characterized in that** the sealing ring (3) is composed of graphite with an initial apparent density of 1.0 at to 1.5 g/cm³.

3. Connection according to one of claims 1 to 2, **characterized in that** the sealing ring (3) terminates at the end of the helically-corrugated metal pipe (1).

4. Connection according to one of claims 1 to 3, **characterized in that** the connector (4) has a peripheral groove (4c) on its outer surface between the end which faces the end of the helically-corrugated metal pipe (1) and the outer thread (4a).

5. Connection according to one of claims 1 to 4, **characterized in that** the pitch of the inner thread (2c) of the sleeve-shaped extension (2b) and the outer thread (4a) of the connector (4) run counter to the helical corrugation of the metal pipe (1):

6. Connection according to one of claims 1 to 5, **characterized in that** the cavity is reduced to less than 30% in comparison to the beginning of the screwing process.

## Revendications

1. Liaison entre l'extrémité d'un tuyau métallique ondulé en spirale (1) et d'une pièce de raccordement (4) sur laquelle :
a) une bague de pression (2) est vissée à l'extrémité du tuyau métallique ondulé en spirale (1) avec l'un des filetages (2a) adaptés à l'ondulation en spirale,
b) la bague de pression (2) comporte un manchon-raccord (2b) dont le diamètre intérieur est supérieur à celui du filetage (2a),
c) le manchon-raccord (2b) de la bague de pression (2) comporte un filetage intérieur (2c),
d) la pièce de raccordement (4) est vissée dans le filetage intérieur (2c) du manchon-raccord (2b), avec un filetage extérieur (4a) situé au niveau de sa surface extérieure,
e) la pièce de raccordement (4) comporte un raccord cylindrique creux (4b) qui entre dans l'extrémité du tuyau métallique ondulé en spirale (1), dont le diamètre extérieur est identique ou légèrement inférieur au diamètre intérieur du tuyau métallique ondulé en spirale (1).
f) entre la bague de pression (2), le manchon-raccord (2b), une face frontale de la pièce de raccordement (4) et l'extrémité du tuyau métallique ondulé en spirale (1), se trouve un creux (5), dans lequel est disposé un joint d'étanchéité (3),
**caractérisée en ce que** le joint d'étanchéité (3) est constitué de graphite, le joint d'étanchéité est comprimé par le vissage de la pièce de raccordement (4) et le rétrécissement du creux (5) qui en résulte, et occupe entièrement l'espace du creux rétréci, et par le fait que l'extrémité du tuyau métallique ondulé en spirale (1) est refoulée.

2. Liaison selon la revendication 1, **caractérisée en ce que** le joint d'étanchéité (3) est constitué de graphite d'une densité brute initiale allant de 1,0 à 1,5 g/cm³.

3. Liaison selon une des revendications 1 et 2, **caractérisée en ce que** le joint d'étanchéité (3) se termine avec l'extrémité du tuyau métallique ondulé en spirale (1).

4. Liaison selon une quelconque des revendications 1 à 3, **caractérisée en ce que** la pièce de raccordement (4) comporte une rainure périphérique (4c) au niveau de sa surface extérieure, entre son extrémité tournée vers l'extrémité du tuyau métallique ondulé en spirale(1) et son filetage extérieur (4a).

5. Liaison selon une quelconque des revendications 1 à 4, **caractérisée en ce que** le pas de filetage intérieur (2c) du manchon-raccord (2b) et du filetage extérieur (4a) de la pièce de raccordement (4) tourne dans le sens opposé à l'ondulation en spirale du tuyau métallique (1).

6. Liaison selon une quelconque des revendications 1 à 5, **caractérisée en ce que** le creux est réduit à moins de 30% par rapport au début du vissage.
